# EUROPÄISCHE PATENTSCHRIFT

(11) **EP 1 155 725 B1**
(45) Veröffentlichungstag und Bekanntmachung des Hinweises auf die Patenterteilung: **06.12.2006**
(21) Anmeldenummer: 01112353.6
(22) Anmeldetag: 21.05.2001
(51) Int. Cl.: B01D 46/04, B01D 46/24, B01D 46/42

(54) **Filter**
Filter
Boîtier

(30) Priorität: 19.05.2000 DE 10024424
(43) Veröffentlichungstag der Anmeldung: 21.11.2001
(73) Patentinhaber: Trost, Bärbel, Dipl.-Ing., 97947 Grünsfeld (DE)
(72) Erfinder: Trost, Bärbel, Dipl.-Ing., 97947 Grünsfeld (DE)
(74) Vertreter: Tappe, Hartmut

(56) Entgegenhaltungen:
- GB-A- 2 295 970
- US-A- 4 838 901

## Beschreibung

Die vorliegende Erfindung betrifft ein Filtergehäuse nach dem Oberbegriff des Patentanspruchs 1.

Filtergehäuse der eingangs genannten Art werden in der Filtrationstechnik für Filter verwendet, die beispielsweise in der Abgasreinigung als Staubfilter oder als Abscheidefilter bei der Produktrückgewinnung, beispielsweise in einer pneumatischen Förderanlage, eingesetzt werden. Die zu reinigenden Stäube sind unterschiedlichster Art und fallen beispielsweise bei der Lebensmittelherstellung und -verarbeitung sowie bei der Herstellung und Verarbeitung von technischen Produkten, beispielsweise Kunststoff oder Glas, oder auch im Pharmabereich an. Dabei bilden Filtervorrichtungen, die in einem derartigen Gehäuse angeordnet sind, oftmals die letzte Einrichtung in einer entsprechenden verfahrenstechnischen Anlage und sind daher häufig im Freien angeordnet. Der Filterkörper des Filtergehäuses hat dabei im Wesentlichen die Aufgabe, das sich an Filterelementen abscheidende Filtergut aufzunehmen und gegebenenfalls zu sammeln. Die den Filterboden mit den darin angeordneten Filterelementen abdeckende Filterabdeckung nimmt einerseits häufig ein Abreinigungsrohrsystem zur Beaufschlagung des Filterelements mit Druckluft auf und dient andererseits zur Abschirmung der Filterelemente gegen äußere Einflüsse.

Da an die Haltbarkeit der Witterungseinflüssen und häufig auch aggressivem Filtergut ausgesetzten Filtergehäuse sowie auch an deren Stabilität hohe Maßstäbe gesetzt werden, hat sich eine Herstellung derartiger Filtergehäuse aus nichtrostenden Blechwerkstoffen, insbesondere aus Stahlblech, durchgesetzt. Hierbei hat sich der im Wesentlichen durch die Umformung und Verschweißung der Blechwerkstoffe bedingte Fertigungsaufwand als beträchtlich herausgestellt.

Aus der US-A-4 838 901 geht ein Flüssigkeitsfilter für den Fahrzeugbau, insbesondere für den Flugzeugbau, hervor, der ein Schnappverschlussfiltergehäuse in Leichtbauweise aufweist, bei dem Ober-, Mittel- und Unterteil aus hochfestem Kunststoff bestehen und das Verschlusseinrichtungen für diese Gehäuseteile besitzt sowie einen Deckel aus hochfestem Plastik aufweist. Der Deckel besitzt eine Ausflussöffnung und einen Schnappverschluss zur Befestigung an dem Gehäuse sowie einen Durchflusstlüssigkeitsfilter, der in dem Gehäuse untergebracht ist. Das Filtergehäuse umfasst ein Filterelement und einen Filterboden, der die Seite der verschmutzten Flüssigkeit von der Seite der gereinigten Flüssigkeit trennt.

Aufgabe der vorliegenden Erfindung ist es daher, ein Filtergehäuse vorzuschlagen, das bei ausreichender Festigkeit und Beständigkeit gegen Witterungs- und Produkteinflüsse eine vereinfachte und damit kostengünstigere Herstellung ermöglicht.

Diese Aufgabe wird durch ein Filtergehäuse mit den Merkmalen des Anspruchs 1 gelöst.

Bei dem erfindungsgemäßen Filtergehäuse sind zumindest der Filterkörper und die Filterabdeckung aus einem formstabilen Kunststoff gefertigt. Im Gegensatz zur bisherigen Herstellung der wesentlichen Gehäuseteile des Filtergehäuses aus Blechwerkstoffen, die insbesondere im Fall von Stahlblech wegen der hohen Umformkräfte den Einsatz von sowohl in der Beschaffung als auch im Betrieb teuren Hochdruckumformmaschinen erfordert, ermöglicht die Herstellung aus Kunststoff beispielsweise eine Herstellung in Kunststoffformen mit einem wesentlich geringeren Energieeinsatz. Darüber hinaus weisen in Kunststoffformtechnik hergestellte Filtergehäuse ein vergleichbar geringes Eigengewicht auf, so dass auch die Handhabung und Installation derartiger Filtergehäuse vereinfacht ist.

Ein weiterer Vorteil der Filtergehäuse aus Kunststoff liegt in einer mit vergleichsweise geringem Aufwand herstellbaren Einfärbung der Gehäuseteile, die durch Zugabe von Farbpigmenten in die Kunststoffmasse vor Eintritt in die Kunststoffform erfolgen kann. Somit entfällt abweichend von den herkömmlichen Filtergehäusen die Notwendigkeit, eine Farbgestaltung durch einen nachträglichen, also von der eigentlichen Herstellung des Filtergehäuses unabhängigen Farbauftragsvorgang zu erzeugen.

Ein weiterer Vorteil eines Filtergehäuses aus Kunststoff liegt in der thermisch isolierenden Wirkung von Kunststoff begründet, die die Bildung von Kondenswasser an der Innenwand des Filtergehäuses weitestgehend verhindert und somit auch eine entsprechende Durchfeuchtung des Filterguts.

Als Kunststoffe kommen grundsätzlich alle für den Behälterbau geeigneten Kunststoffe, insbesondere auch Kunststoffe enthaltende Verbundwerkstoffe, in Frage. Um die vorbeschriebene isolierende Wirkung des Kunststoffs noch zu verstärken, ist es auch möglich, zumindest für die Wandung des Filterkörpers einen Sandwich-Aufbau, beispielsweise mit einer Kunststoffaußenschale, einer Zwischenlage aus Isoliermaterial, wie beispielsweise ein Isolierschaum oder Gas, und einer Kunststoffinnenschale, zu wählen.

Bei einer vorteilhaften Ausführungsform des Filtergehäuses ist ein in der Filterabdeckung angeordnetes Abreinigungsrohrsystem ebenfalls aus Kunststoff gebildet. Hierdurch lassen sich die im Zusammenhang mit der Ausbildung des Filtergehäuses erzielbaren Vorteile hinsichtlich vereinfachter Fertigung und Gewichtsreduzierung auch auf im Filtergehäuse angeordnete Funktionsteile ausdehnen. Auch weitere dem Abreinigungsrohrsystem zugeordnete Einheiten, wie ein Steuerungsgehäuse zur Aufnahme einer elektronischen Steuerungseinrichtung und ein Druckluftspeicher zur Bereitstellung der Druckluft für die Abreinigung der Filterelemente, können aus Kunststoff gebildet sein.

Als besonders vorteilhaft erweist es sich dabei, beispielsweise das Abreinigungsrohrsystem einstückig mit der Filterabdeckung auszubilden, wodurch eine Herstellung von Filterabdeckung und Abreinigungsrohrsystem in einem gemeinsamen Herstellungsverfahren möglich wird. Genauso können auch das Steuerungsgehäuse und der Druckluftspeicher einstückig mit der Filterabdeckung ausgebildet sein.

Eine weitere Steigerung hinsichtlich Vereinfachung des Herstellungsverfahrens und Gewichtsreduzierung wird möglich, wenn darüber hinaus auch der Filterboden aus Kunststoff gefertigt ist. Dies gilt insbesondere dann, wenn der Filterboden einstückig mit dem Filterkörper verbunden ist. Dabei muss der Filterboden nicht unbedingt aus demselben Kunststoff wie der Filterkörper hergestellt sein, obwohl sich auch hier eine einstückige Ausbildung von Filterboden und Filterkörper betreffend die Vereinfachung des Herstellungsverfahrens als vorteilhaft erweist.

Da der Filterkörper - insbesondere wegen des daran ausgebildeten, die Filterelemente aufnehmenden Filterbodens - besonderen mechanischen Belastungen ausgesetzt ist, erweist es sich als vorteilhaft, zumindest den Filterkörper und den Filterboden aus einem faserverstärkten Kunststoff, wie beispielsweise einem glasfaserverstärkten oder einem kohlefaserverstärkten Kunststoff, herzustellen. Bei Bedarf ist es auch möglich, um eine vereinfachte Variantenfertigung, insbesondere hinsichtlich der Höhe des Filterkörpers, zu ermöglichen, den Filterkörper aus miteinander kombinierbaren Segmenten zusammengesetzt zu gestalten, die vorgefertigt sein können und beispielsweise unter Verwendung eines Kunstharzklebers miteinander verbunden sein können. Auf diese Art und Weise ist es auch möglich, den Filterkörper zusammengesetzt aus relativ dünnwandigen Zylindermantelsegmenten, die mittels relativ steif ausgeführter Versteifungssegmente miteinander verbunden sind, herzustellen. Ein derartiger Aufbau ist natürlich auch für die Filterabdeckung denkbar.

Nachfolgend wird eine mögliche Ausführungsform eines Filtergehäuses anhand der Zeichnung näher erläutert. Es zeigen:
- **Fig. 1**: ein Filtergehäuse mit einem Filterkörper und einer Filterabdeckung in geschlossenem Zustand und Seitenansicht;
- **Fig. 2**: eine perspektivische Darstellung des in **Fig. 1** dargestellten Filtergehäuses mit aufgeschwenkter Filterabdeckung.

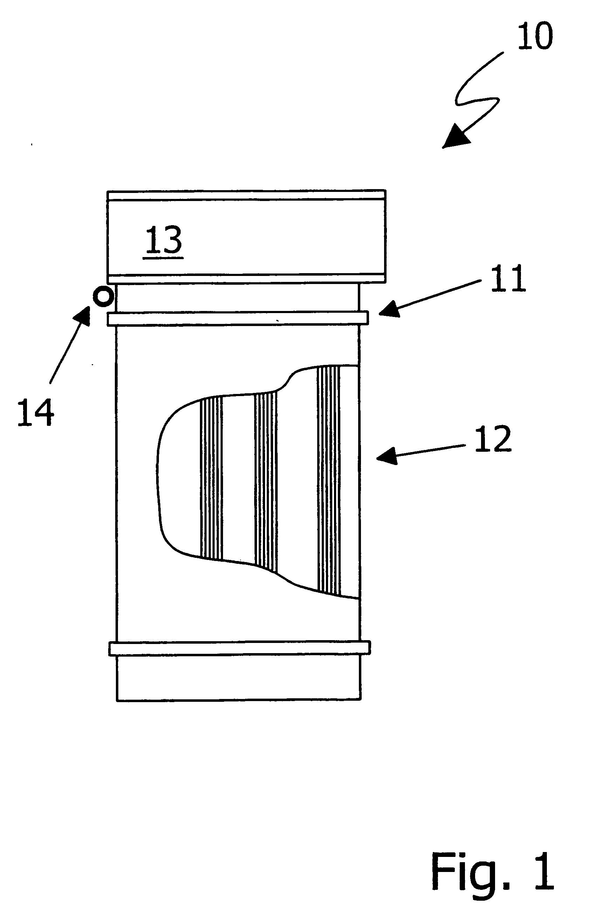

**Fig. 1** zeigt in einer Seitenansicht einen Filter 10, der im vorliegenden Fall als Staubfilter zur Filterung von Gasen Verwendung findet. Der Filter 10 weist ein Filtergehäuse 11 auf, das hier zweiteilig ausgebildet ist, mit einem im Wesentlichen zylinderförmigen Filterkörper 12 und einer nachfolgend als Wetterhaube 13 bezeichneten Filterabdeckung, die im vorliegenden Fall über eine Schwenkgelenkeinrichtung 14 mit dem oberen Rand des Filterkörpers 12 verbunden ist. Abweichend von der hier dargestellten Zylinderform bietet die Verwendung von Kunststoff auch andere Gestaltungsmöglichkeiten, wie beispielsweise quaderförmige Filtergehäuse.

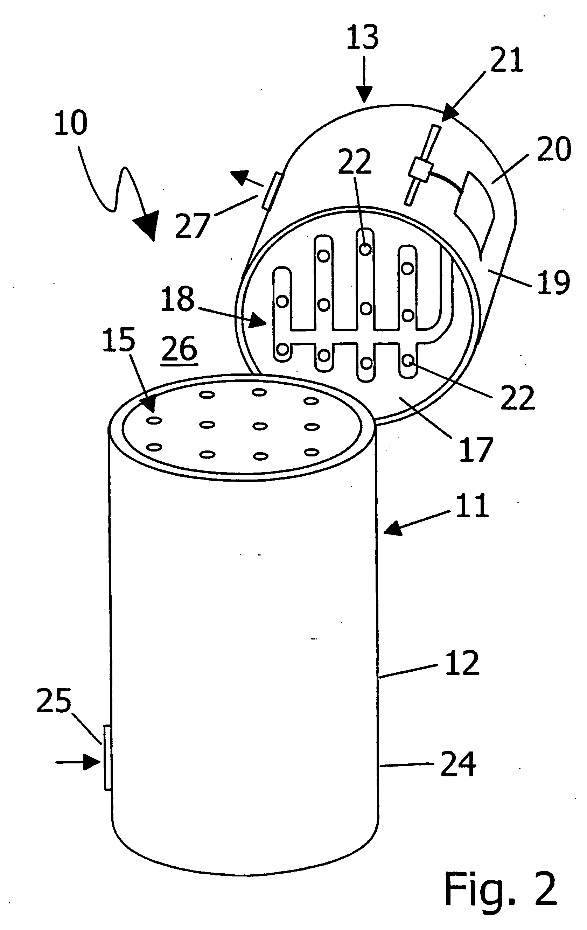

Aus der perspektivischen Darstellung des Filters 10 im geöffneten Zustand gemäß **Fig. 2** sind weitere, im Innern des Filtergehäuses 11 angeordnete Filtereinrichtungen ersichtlich, die im vorliegenden Fall eine als Filterboden im Bereich des oberen stirnseitigen Endes des Filterkörpers 12 angeordnete Filterplatte 15 mit darin eingesetzten Filterelementen sowie ein an einem Deckelboden 17 der Wetterhaube 13 angeordnetes Abreinigungsrohrsystem 18 umfassen. Weiterhin sind in bzw. an einer Deckelwandung 19 der Wetterhaube 13 eine hier nicht näher dargestellte Eingabe-/Displayeinrichtung, eine Filtersteuereinrichtung 20 sowie eine Magnetventileinrichtung 21 vorgesehen, die eine gezielte Zufuhr von Druckluft in das Abreinigungsrohrsystem 18 ermöglicht. Anstatt des hier dargestellten Abreinigungssystems umfassend die Filtersteuereinrichtung 20, die Magnetventileinrichtung 21 und das Abreinigungsrohrsystem 18 kann auch ein hier nicht näher dargestelltes mechanisch betätigtes Abreinigungssystem, also beispielsweise eine Rütteleinrichtung, zum Einsatz kommen, wobei zumindest Teile davon auch aus Kunststoff bestehen können.

Wie ferner aus **Fig. 2** ersichtlich, weist das Abreinigungsrohrsystem 18 mehrere Düseneinrichtungen 22 auf, die jeweils einem Filterelement zugeordnet sind und in geschlossenem Zustand des Filtergehäuses 11 unmittelbar über den Filterelementen 16 angeordnet sind und so eine gezielte Druckluftbeaufschlagung der Filterelemente 16 ermöglichen. Im Betrieb des Filters 10 wird auf einer Kontaminationsseite der Filterplatte 15 über eine hier in einer Außenwandung 24 des Filterkörpers 12 angeordnete Gaszuleitung 25 verunreinigtes Gas in den Filterkörper 12 eingeleitet. Das unter Druck stehende Gas gelangt dann durch die Filterelemente 16 auf eine Reingasseite 26 der Filterplatte 15 und schließlich durch eine Reingasabführung 27 in die Umgebung.

Bei dem in den **Fig. 1** und **2** dargestellten Ausführungsbeispiel des Filtergehäuses 11 sind sowohl der Filterkörper 12 als auch die Wetterhaube 13 aus Kunststoff gefertigt. Weiterhin bestehen sowohl das Abreinigungsrohrsystem 18 als auch die Filterplatte 15 aus Kunststoff. Wegen des insbesondere zwischen zwei Reinigungszyklen, in denen die Filterelemente 16 über das Abreinigungsrohrsystem 18 mit Druckluft beaufschlagt werden, auf der Kontaminationsseite der Filterplatte 15 zunehmenden Filterdrucks ist es besonders vorteilhaft, den Filterkörper 12 und die Filterplatte 15 aus einem Kunststoff mit hohem Berstwiderstand, wie beispielsweise einem faserverstärktem Kunststoff oder einem Verbundwerkstoff, der über Kunststoffanteile verfügt, herzustellen.

## Patentansprüche

1. Filtergehäuse für einen Filter zur Gasreinigung, umfassend einen Filterkörper mit einem Filterboden zur Trennung einer Kontaminationsseite von einer Reingasseite und eine Filterabdeckung zum Schutz des Filterbodens gegen Umwelteinflüsse, wobei der Filterkörper und die Filterabdeckung aus einem formstabilen Kunststoff gefertigt sind,
**dadurch gekennzeichnet,**
**dass** der Filterboden (15) eine Anordnung von Filterelementen aufnimmt.

2. Filtergehäuse nach Anspruch 1,
**dadurch gekennzeichnet,**
**dass** die Filterabdeckung (13) mit einem aus Kunststoff gefertigten Abreinigungsrohrsystem (18) versehen ist.

3. Filtergehäuse nach Anspruch 2,
**dadurch gekennzeichnet,**
**dass** das Abreinigungsrohrsystem (18) einstückig mit der Filterabdeckung (13) ausgebildet ist.

4. Filtergehäuse nach einem oder mehreren der vorangehenden Ansprüche,
**dadurch gekennzeichnet,**
**dass** der Filterboden (15) aus Kunststoff gefertigt ist.

5. Filtergehäuse nach Anspruch 4,
**dadurch gekennzeichnet,**
**dass** der Filterboden (15) einstückig mit dem Filterkörper (12) verbunden ist.

6. Filtergehäuse nach Anspruch 5,
**dadurch gekennzeichnet,**
**dass** zumindest der Filterkörper (12) und der Filterboden (15) aus einem faserverstärkten Kunststoff gefertigt sind.

7. Filtergehäuse nach einem oder mehreren der vorangehenden Ansprüche,
**dadurch gekennzeichnet,**
**dass** zumindest der Filterkörper aus ringförmigen Segmenten zusammengesetzt ist.

## Claims

1. Filter housing for a filter for gas cleaning comprising: a filter body with a filter bottom separating a contaminated side from a clean gas side and a filter covering in order to protect the bottom of the filter against environmental influences, wherein the filter body and the filter covering are composed of a dimensionally stable synthetic material,
**characterized in that**
the bottom of the filter (15) comprises an assembly of filter elements.

2. Filter housing according to claim 1,
**characterized in that**
the filter covering (13) is provided with a pipe system for cleaning outgoing air (18) composed of a synthetic material.

3. Filter housing according to claim 2,
**characterized in that**
the pipe system for cleaning outgoing air (18) is integrally formed with the filter covering (13).

4. Filter housing according to any of the preceding claims,
**characterized in that**
the bottom of the filter (15) is composed of a synthetic material.

5. Filter housing according to claim 4,
**characterized in that**
the bottom of the filter (15) is integrally connected with the filter body (12).

6. Filter housing according to claim 5,
**characterized in that**
at least the filter body (12) and the bottom of the filter (15) are composed of a fibre reinforced synthetic material.

7. Filter housing according to any of the preceding claims,
**characterized in that**
at least the filter body is composed of annular segments.

## Revendications

1. Boîte à filtre pour un filtre permettant la purification du gaz comprenant: un corps filtrant avec un fond filtrant permettant la séparation d'une partie contaminée d'une partie de gaz purifié et un couvercle filtrant permettant la protection du fond filtrant contre des influences d'environnement, le corps filtrant et le couvercle filtrant étant fabriqués en une matière synthétique indéformable, charactérisée en ce que le fond filtrant (15) comprend un ensemble d'éléments filtrants.

2. Boîte à filtre selon la revendication 1,
charactérisée en ce que
le couvercle filtrant (13) comprend un système de tubes pour la purification d'air échappant (18) fabriqué en matière synthétique.

3. Boîte à filtre selon la revendication 2,
charactérisée en ce que
le système de tubes pour la purification d'air échappant (18) est intégralement formé avec le couvercle filtrant (13)

4. Boîte à filtre selon l'une quelconque des revendications précédentes,
charactérisée en ce que
le fond filtrant (15) est fabriqué en matière synthétique.

5. Boîte à filtre selon la revendication 4,
charactérisée en ce que
le fond filtrant (15) est intégralement fixé avec le corps filtrant (12).

6. Boîte à filtre selon la revendication 5,
charactérisée en ce qu'
au moins le corps filtrant (12) et le fond filtrant (15) sont fabriqués d'une matière synthétique renforcée par fibres.

7. Boîte à filtre selon l'une quelconque des revendications précédentes,
charactérisée en ce qu'
au moins le corps filtrant est composé de segments annulaires.
